# EUROPEAN PATENT SPECIFICATION

(11) **EP 2 774 491 B1**
(45) Date of publication and mention of the grant of the patent: **17.08.2016**
(21) Application number: 12876895.9
(22) Date of filing: 21.12.2012
(51) Int. Cl.: A23L 7/109, A23L 3/36

(54) **PRODUCTION METHOD FOR FROZEN COOKED PASTA**
HERSTELLUNGSVERFAHREN FÜR GEFRORENE GEKOCHTE PASTA
PROCÉDÉ DE PRODUCTION DE PÂTES CUITES CONGELÉES

(30) Priority: 14.05.2012 JP 2012110188; 31.05.2012 CN 201210174977
(43) Date of publication of application: 10.09.2014
(73) Proprietor: Nisshin Foods Inc., Tokyo 101-8441 (JP)
(72) Inventor: IRIE, Kentarou, Fujimino-shi Saitama 356-8511 (JP); SUGA, Youhei, Fujimino-shi Saitama 356-8511 (JP); KOIZUMI, Norio, Fujimino-shi Saitama 356-8511 (JP); WATANABE, Takenori, Fujimino-shi Saitama 356-8511 (JP); MIYA, Youichirou, Fujimino-shi Saitama 356-8511 (JP); YOSHIDA, Tsuguhiko, Tokyo 101-8441 (JP)
(74) Representative: Blodig, Wolfgang
(86) International application number: PCT/JP2012/083209
(87) International publication number: WO 2013/171930

(56) References cited:
- EP-A1- 2 201 847
- JP-A- H0 970 272
- JP-A- S61 141 855
- DATABASE WPI Week 200565 Thomson Scientific, London, GB; AN 2005-634146 XP002737387, & JP 2005 253460 A (EZAKI GLICO CO LTD) 22 September 2005 (2005-09-22)
- DATABASE WPI Week 200503 Thomson Scientific, London, GB; AN 2005-024921 XP002737388, & JP 2004 350555 A (NISSIN SHOKUHIN KAISHA LTD) 16 December 2004 (2004-12-16)

## Description

### [Technical Field]

The present invention relates to a method for producing cooked and frozen pastas. In more detail, the present invention relates to a method for producing cooked and frozen pastas which can be stored for a long time in a state such that the pastas is cooked by boiling fresh pasta noodles, followed by freezing, and which retain good appearance and texture comparable to freshly boiled fresh pasta even after being thawed.

### [Background Art]

Fresh pastas refer to pastas which are produced from dough without going through a drying step. Fresh pastas are different foods from dried pastas in terms of production steps as well as product appearance. Also, fresh pastas are popular foods because they attain a unique, soft yet elastic texture after they are boiled. However, because fresh pastas have poor storage stability due to high water content, they have a problem that they cannot be cooked in advance. Fresh pastas in a chilled or frozen state are commercially available. However, it is difficult to maintain good appearance and texture of freshly produced fresh pastas because chilled- or frozen-stored fresh pastas are prone to quality deterioration during storage. Further, when pastas obtained by cooking fresh pastas are chilled- or frozen-stored with sauce on top, quality is deteriorated. For example, the sauce penetrates into the pasta during storage, resulting in an exceedingly soft texture. EP2201847 A1 discloses a method of producing frozen noodles.

Fresh pastas which can be stored for a long time have already been proposed before. For example, Patent Literature 1 describes a method for producing quickly-rehydratable fresh pastas having storage stability, comprising drying dough, which has been extruded out at a specific pressure under specific vacuum conditions, to certain water content, and then sealing and sterilizing the dough. However, because the above fresh pastas have been subjected to a drying process, they have a similar texture to that of boiled dried pasta, failing in providing a satisfactory soft and elastic texture unique to fresh pastas.

Patent Literature 2 describes a method, comprising frozen-storing semi-fresh pasta, which has been boiled and cooked, and cooking the pasta with water in a microwave oven before serving. However, because pastas provided by the above cooking method are semi-cooked pasta prepared by boiling dried pasta, they have a completely different texture from so-called boiled fresh pasta prepared by boiling fresh state.

Patent Literature 3 describes a method for producing fresh noodles with excellent storage stability, comprising kneading wheat flour or wheat semolina, activated gluten powder and/or egg white with water, and then subjecting the resulting mixture to extrusion under reduced pressure. However, although the resulting fresh noodles had a good appearance, they were unsatisfactory in terms of storage stability.

Patent Literature 4 describes pasta, characterized by subjecting dough which has been kneaded under reduced pressure and then extrusion into chips, to further kneading and extrusion. However, because this pasta was intended to provide less stickiness and excellent smoothness and hardness with adequate elasticity by diversifying the direction of the gluten network of the dough, two extrusion steps were necessary, resulting in the pasta having a very hard texture lacking a chewy and resilient (*mochimochi*) texture.

In light of the above, in a practical situation, there is a demand for cooked pastas which can be stored in a frozen state for a long time, while maintaining a unique soft yet elastic texture of boiled fresh pasta even after frozen-storage.

### [Citation List]

### [Patent Literature]

[Patent Literature 1] JP-B-S63-32424
[Patent Literature 2] JP-A-H10-295302
[Patent Literature 3] JP-A-2001-245617
[Patent Literature 4] JP-A-2001-346533

JP61141855A discloses production of frozen pasta, JP-A-09070272 discloses instant noodles XP002737387 discloses method for preparing boiled noodles, XP002737388 discloses manufacture of buckwheat noodles.

### [Summary of Invention]

### [Technical Problem]

In light of the practical situation described above, an object of the present invention is to provide cooked and frozen pastas which can be stored in a frozen state for a long time and which retain good appearance and texture comparable to freshly boiled fresh pastas even after being thawed.

### [Solution to Problem]

The present inventors conducted various studies to achieve the aforementioned object. As a result, they found that cooked and frozen pastas which were produced by boiling fresh pasta obtained by extruding dough into pasta noodles at a specific pressure attaching a liquid comprising an oil or fat having a melting point of 10°C or less to the boiled pasta, and then freezing the resulting pasta are highly resistant to freezing, and thus can be stored in a frozen state for a long time while presenting good appearance and texture comparable to freshly boiled fresh pasta after being thawed, thereby completing the present invention.

That is, the present invention provides a method for producing cooked and frozen pastas, comprising steps of boiling directly fresh pastas obtained by extruding dough into pasta noodles at a pressure of from 7845.32 kPa (80 kgf/cm²) to 19613.30 kPa (200 kgf/cm²), bringing the boiled pasta into contact with a liquid comprising an oil or fat having a melting point of 10°C or less, and then freezing the pasta which has been brought into contact with the liquid.

### [Advantageous Effects of Invention]

In the cooked and frozen pastas obtained by the production method of the present invention, the water and oil are prevented from moving during freezing or thawing. Thus, the cooked and frozen pastas obtained by the production method of the present invention are highly resistant to freezing and can maintain favorable appearance even after long-term frozen storage, and after being thawed, they can retain good appearance and texture as obtained when conventional fresh pastas are consumed immediately after being boiled. Moreover, since deterioration of appearance and texture of pasta caused by the absorption of sauce is prevented in the cooked and frozen pastas obtained by the production method of the present invention, even when they are frozen-stored with sauce on top, good quality can be maintained.

### [Description of Embodiments]

In general, fresh pastas are produced by rolling out noodle dough while applying pressure and cutting out the resulting dough into noodles or by extruding noodle dough while applying pressure in accordance with various noodle production methods such as rolling, rolling, and extruding. However, in either case, noodle production was not carried out under high pressure because there was no need to dry noodles according to conventional production methods of fresh pasta, and the unique texture of dried pastas was not necessary. According to conventional production methods of fresh pastas, pressure applied to noodle dough during noodle production is approximately 0 kgf/cm² in the case of rolling, and it is approximately 1961.33 kPa (20 kgf/cm²) even in the case of extrusion.

However, fresh pastas used in the method for producing cooked and frozen pastas according to the present invention is prepared by applying, to dough, such an unusually high pressure as a pressure to be applied to fresh pastas. For example, fresh pastas used in the production method of the present invention can be prepared by extruding dough into noodles at a pressure of from 7845.32 kPa (80 kgf/cm²) to 19613.30 kPa (200 kgf/cm²). The extrusion pressure is equal to or higher than the extrusion pressure normally used in the production of dried pasta (approximately from 6864.66 to 15690.64 kPa (70 to 160 kgf/cm²)), and is extremely high as a pressure to be applied to fresh pastas.

Dough for fresh pastas used in the production method of the present invention is noodle dough obtained by adding kneading water to 100% wheat flour or a flour ingredient containing wheat flour as the main component, followed by kneading. Wheat flour used for the aforementioned flour ingredient is not particularly limited as long as it is one that can be used for pastas, and examples thereof include wheat flour such as hard wheat flour, semi-hard wheat strong flour, moderate wheat flour, soft wheat flour, and durum wheat flour, and semolina wheat flour such as durum semolina. These flours can be used singly or in combinations of two or more thereof.

As the aforementioned wheat flour, it is preferable to use a mixture of durum wheat flour and regular wheat flour other than durum wheat flour since the chewy and resilient (*mochimochi*) texture of the pasta obtained can be improved compared to that obtained by use of durum wheat flour alone. Examples of the regular wheat flour include hard wheat flour, semi-hard wheat flour, moderate wheat flour, soft wheat flour, and a mixture of these flours, among which moderate wheat flour is preferable.

Alternatively, it is preferable to further blend, in addition to the aforementioned wheat flour, starch or processed starch in the aforementioned flour ingredient of dough of fresh pastas since the texture of the pasta obtained can be further improved. Examples of the starch include one which can be normally used in pastas such as tapioca starch, potato starch, wheat starch, corn starch, and waxy corn starch. Examples of the processed starch include one obtained by subjecting the above starch to processing such as acetylation, hydroxypropylation, etherification, cross-linking, oxidation, and pregelatinization or by physical treatment. The aforementioned starches and processed starches can be used singly or in combinations of two or more thereof. Among the aforementioned starches and processed starches, hydroxypropylated starch is preferable since it improves the chewy and resilient *(mochimochi)* texture of pasta.

The aforementioned flour ingredient of dough of fresh pastas preferably contains durum flour and at least one selected from the group consisting of starch, processed starch, and regular wheat flour. The flour ingredient more preferably contains durum wheat flour, regular wheat flour, and at least one selected from the group consisting of starch and processed starch. The blending ratio of durum wheat flour to at least one selected from the group consisting of starch, processed starch and regular wheat flour in the flour ingredient is preferably 30 : 70 to 95 : 5, more preferably 60 : 40 to 90 : 10.

In addition to the aforementioned wheat flour, starches, and processed starch, other ingredients normally used for the production of fresh pastas such as sugars, gluten, eggs, salt, oil and fat, emulsifiers, and thickeners can be added to the aforementioned flour ingredient. The amount of these other ingredients added may be from 0 to 30 parts by mass relative to 100 parts by mass of the aforementioned wheat flour, starches and processed starch.

As the kneading water used for the production of dough, any kind of water used for routine noodle production such as of water, salt water, and lye water can be used. Considering that the dough obtained is subjected to such a high extrusion pressure as described above, the amount of kneading water added is preferably from 18 to 35 parts by mass, more preferably from 20 to 30 parts by mass, and even more preferably from 24 to 27 parts by mass relative to 100 parts by mass of the flour ingredient. When the amount of kneading water added is less than 18 parts by mass, the extruded noodle strands become fragile and easily fragmented. On the other hand, when the amount of kneading water added exceeds 35 parts by mass, the dough becomes weak and susceptible to damage, resulting in failure of the fresh pastas thus obtained to achieve the desired appearance or texture.

In the present invention, fresh pastas are obtained by producing noodles using the aforementioned dough under high pressure. That is, fresh pastas used in the method of the present invention are produced by extruding the above dough into noodles at a pressure of, for example, from 7845.32 to 19613.30 kPa (80 kgf/cm² to 200 kgf/cm²), preferably from 11767.98 to 15690.64 kPa (120 to 160 kgf/cm²). The degree of pressure reduction during extrusion may be from -200 mmHg to vacuum, preferably from -600 mmHg to vacuum. The extrusion can be carried out by using, for example, an extrusion noodle making machine used for the production of dried pasta.
According to the present method, in the preparation process of the fresh pasta, noodles may be prepared by extruding dough which has been obtained by kneading the ingredients; therefore, the kneading step and the noodle preparation-by-extrusion step may each be performed once. According to the present method, in the preparation process of the fresh pasta, the kneading step and the noodle preparation-by-extrusion step need not be performed twice or more, meaning that the dough made into noodles needs not be kneaded again or subjected to another noodle preparation process.

In the present invention, the shape of the fresh pastas is not particularly limited, and after extruding dough into noodle sheets, they can be made into the desired shape such as noodle strands by, for example, compression flattening and cutting in accordance with a routine method. Alternatively, pastas can be made into the desired shape by extruding dough through a die having openings of appropriate shape.

In the production method of the present invention, the fresh pastas obtained according to the above procedure are directly boiled without being subjected to a drying step, etc. Boiling can be performed by a regular boiling method used for fresh pasta. In general, fresh pastas are cooked in boiling water for two to eight minutes. After optionally draining hot water, the pastas are cooled.

Subsequently, the pastas boiled as described above are brought into contact with a liquid comprising an oil or fat having a melting point of 10°C or less. The kind of the oil or fat having a melting point of 10°C or less is not particularly limited as long as the oil or fat is an edible oil having a melting point of 10°C or less, preferably 3°C or less. Examples thereof include soybean oil, corn oil, canola oil, olive oil, sesame oil, and a mixed oil or fat thereof. Among them, soybean oil is preferable. Alternatively, the oil or fat having a melting point of 10°C or less can be a mixed oil or fat in which an oil or fat having a higher melting point and an oil or fat having a lower melting point are mixed in such a way as to achieve a certain melting point. In the present specification, the melting point of an oil or fat refers to the slipping point described in 2.2.4.2-1996 of Kijun yushi bunseki shikenho (or its English version, "The JOCS Standard Methods for the Analysis of Fats, Oils and Related Materials", First English Edition, 2009, Japan Oil Chemists' Society).

The aforementioned liquid comprising an oil or fat having a melting point of 10°C or less may contain, in addition to the aforementioned oils and fats, water, an emulsifier and a thickener. Examples of the thickener include gums such as xanthan gum, tamarind gum, and guar gum, polysaccharides such as carrageenanand agar, hyaluronic acid and alginic acid. Among them, xanthan gum is preferable. The content of the oil or fat having a melting point of 10°C or less in the aforementioned liquid is 5% by mass or more, preferably from 10 to 95% by mass.

As a means for bringing the aforementioned liquid comprising an oil or fat having a melting point of 10°C or less with the aforementioned boiled pastas, a means enabling the liquid to attach to the entire surface of the pasta is preferable, and examples of such a means include spraying, spreading, and immersing. Among them, in terms of economic efficiency and convenience, spraying is preferable. The amount of the liquid attahced to the pasta surface may be from 1 to 12 parts by mass, preferably from 3 to 8 parts by mass relative to 100 parts by mass of the boiled pasta. When the attached amount is less than 1 part by mass, the resulting fresh pasta has exceedingly soft texture, while when the attached amount exceeds 12 parts by mass, the resulting fresh pasta has oily texture.

Subsequently, the aforementioned boiled pastas which have been brought into contact with the liquid comprising an oil or fat having a melting point of 10°C or less are subjected to a freezing process. For the freezing process in the production method of the present invention, a freezing process routinely performed on noodles can be adopted. For example, it is preferable that the pastas described above be divided into certain portions, for example, 150 to 300 g for one person, and served on trays, etc., and then subjected to freezing process. For the freezing process, either quick freezing or slow freezing may be feasible; however, quick freezing is preferable. Once the pastas are frozen by quick freezing, they can be stored under normal frozen-storage conditions.

In the aforementioned freezing process, the pastas described above may be frozen with sauce. For example, sauce may be poured on top of the pastas after dividing, into trays or the like, the pasta which has been boiled and attached with the liquid comprising an oil or fat having a melting point of 10°C or less, as described above and the resultant pastas are frozen: or sauce may be mixed with the pastas and the resultant pastas are served on trays, and then frozen. As the sauce, any regular pasta sauce may be used, and examples thereof include a tomato-based sauce such as meat sauce, Neapolitan sauce, and arrabbiata sauce, a white sauce such as carbonara sauce, and a brown sauce; however, the sauce is not limited to these examples.

Compared to conventional frozen product of fresh pastas or boiled fresh pastas, the water and oil are further prevented from moving during freezing or thawing in the cooked and frozen pastas produced in accordance with the production method of the present invention. Thus, the above cooked and frozen pastas are highly resistant to freezing and maintain good appearance even after long-term frozen storage. Further, the above cooked and frozen pastas present good appearance and texture comparable to those provided by freshly boiled fresh pastas even after being thawed or re-heated. Also, since deterioration of appearance and texture of pasta caused by the absorption of sauce is inhibited in the above cooked and frozen pastas, even when they are frozen-stored with sauce on top, good quality can be maintained.

### [Examples]

Hereinbelow, the present invention will be further described in detail with reference to Examples. However, the present invention is not limited to these Examples.

### Production Examples 1 to 8

Durum wheat semolina flour (Leone G: the product of Nisshin Flour Milling Inc.) (100 parts by mass) and water (26 parts by mass) were mixed and then kneaded to prepare noodle dough. Under a reduced pressure condition of -600 mmHg, the dough was extruded into noodles by a pasta making machine under each of the following pressure conditions of 2942, 6864.6, 7845.32, 11767.98, 15690.64, 19613.3, 20593.96 and 24516.62 kPa (30, 70, 80, 120, 160, 200, 210, and 250 kgf/cm²) whereby eight kinds of fresh spaghetti (1.8 mm in diameter) were obtained.

The fresh spaghetti thus obtained was boiled in hot water for five minutes and then cooled with water, whereby boiled spaghetti was produced.

Thirty parts by mass of soybean oil (melting point - 7°C) and 0.2 part by mass of a polysaccharide thickener were mixed, and to the resulting mixed liquid, 5 parts by mass of water was further added, followed by mixing, whereby a coating liquid was prepared. Subsequently, using a spray, the aforementioned coating liquid was sprayed to the entire spaghetti, in an amount of 5% by mass of the mass of the boiled spaghetti, whereby the total amount of the coating liquid was allowed to attach to the boiled spaghetti.

The boiled spaghetti attached with the coating liquid was divided into trays (160 mm × 120 mm; made of polypropylene) at 180 g per tray, and further, for half of the trays, 100 g of commercially available canned meat sauce (the product of Nisshin Foods Inc.) was poured on top of the noodle mass. The resulting spaghetti was quickly frozen at -35°C, whereby the cooked and frozen spaghetti of Production Examples 1 to 8 (each with and without sauce) were produced.

### Production Example 9

The aforementioned noodle dough was rolled out using a noodle maker roller machine (pressure, 0 kgf/cm²) and then cut, whereby fresh spaghetti (1.8 mm in diameter) was obtained. In a similar procedure to Production Example 1, the fresh spaghetti thus obtained was boiled, attached with the coating liquid, and frozen, whereby the cooked and frozen spaghetti of Production Example 9 (with and without sauce) was produced.

### Test Example 1

The cooked and frozen spaghetti of Production Examples 1 to 9 was removed from the trays, packed in polypropylene bags, and then stored at -18°C. After one week, the frozen spaghetti was removed from the bags and then thawed by heating in a microwave oven (600 W). Spaghetti without sauce was heated for three minutes, whereas spaghetti with sauce was heated for 4minutes and 30 seconds. The appearance and texture of the spaghetti after being thawed were evaluated. The spaghetti with sauce was lightly mixed after heating and the appearance and texture of the spaghetti with sauce were evaluated. Evaluation was conducted by 10 panelists based on the evaluation criteria shown in Table 1, and average scores were obtained. The results are shown in Table 2.

**[Table 1]**

| | | |
|---|---|---|
| Appearance of spaghetti | 5 | Noodle surface is very smooth and shiny. |
| | 4 | Noodle surface is fairly smooth and shiny. |
| | 3 | Noodle surface is relatively smooth without roughness. |
| | 2 | Noodle surface is slightly rough or melted. |
| | 1 | Noodle surface is rough or melted. |
| Texture of spaghetti | 5 | Equivalent texture to boiled fresh spaghetti with adequate softness and elasticity. |
| | 4 | Similar texture to boiled fresh spaghetti with softness and elasticity. |
| | 3 | Slightly similar texture to boiled fresh spaghetti with moderate softness and elasticity. |
| | 2 | Slightly too soft or slightly too hard, lacking the texture of boiled fresh spaghetti. |
| | 1 | Too soft or too hard, lacking the texture of boiled fresh spaghetti. |
| Appearance of spaghetti with sauce | 5 | Sauce evenly clings to the entire noodles. |
| | 4 | Sauce roughly evenly clings to the entire noodle. |
| | 3 | Sauce slightly unevenly clings to noodles. |
| | 2 | Sauce poorly or unevenly clings to noodles. |
| | 1 | Sauce very poorly and unevenly clings to noodles. |
| Texture of spaghetti with sauce | 5 | Noodles are sufficiently soft and elastic and harmonized with sauce. Excellent texture. |
| | 4 | Noodles are soft and elastic and harmonized with sauce. Good texture. |
| | 3 | Noodles are relatively soft and elastic. Average texture. |
| | 2 | Noodles are slightly too soft or slightly too hard with absorption of a small amount of sauce. Slightly poor texture. |
| | 1 | Noodles are too soft or too hard with absorption of a large amount of sauce. Poor texture. |

**[Table 2]**

| | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|
| Extrusion pressure (kgf/cm²) | 2942 kPa (30) | 6864.6 kPa (70) | 7845.2 kPa (80) | 11768 kPa (120) | 156904 kPa (160) | 19613.3 kPa (200) | 20593.9 kPa (210) | 24596.6 kPa (250) | 0 |
| Appearance of spaghetti | 2.8 | 3.5 | 4.3 | 4.8 | 4.9 | 4.6 | 4.1 | 3.8 | 2.3 |
| Texture of spaghetti | 2.9 | 3.1 | 4.1 | 4.8 | 4.8 | 4.3 | 3.2 | 2.9 | 2.0 |
| Appearance of spaghetti with sauce | 2.7 | 3.4 | 4.2 | 4.7 | 4.6 | 4.3 | 3.9 | 3.7 | 2.1 |
| Texture of spaghetti with sauce | 3.1 | 3.4 | 4.1 | 4.5 | 4.6 | 4.4 | 3.3 | 3.0 | 2.0 |

### Production Examples 10 to 17

Except for adding water in amounts shown in Table 3 to 100 parts by mass of durum wheat semolina flour (Leone G: manufactured by Nisshin Flour Milling Inc.), the cooked and frozen spaghetti of Production Examples 10 to 17 (each with and without sauce) were produced by the same procedure as in Production Example 5 (noodle extrusion pressure: 15690.64 kPa (160 kgf/cm²)). Using the cooked and frozen spaghetti of Production Examples 10 to 17, the appearance and texture of the spaghetti or spaghetti with sauce after being thawed were evaluated by the same procedure as in Test Example 1. The results are shown in Table 3.

**[Table 3]**

| | Production Example 10 | Production Example 11 | Production Example 12 | Production Example 13 | Production Example 14 | Production Example 15 | Production Example 16 | Production Example 17 |
|---|---|---|---|---|---|---|---|---|
| Water (parts by mass) | 15 | 18 | 20 | 24 | 27 | 30 | 35 | 37 |
| Appearance of spaghetti | 3.1 | 4.2 | 4.5 | 4.8 | 4.9 | 4.6 | 4.3 | 3.7 |
| Texture of spaghetti | 3.2 | 3.9 | 4.4 | 4.8 | 4.8 | 4.3 | 4.0 | 3.6 |
| Appearance of spaghetti with sauce | 3.2 | 4.0 | 4.3 | 4.6 | 4.6 | 4.1 | 4.0 | 3.6 |
| Texture of spaghetti with sauce | 3.5 | 3.9 | 4.3 | 4.6 | 4.6 | 4.4 | 4.3 | 3.7 |

### Production Examples 18 to 22

Except for changing the melting point of an oil or fat contained in the coating liquid as shown in Table 4, the cooked and frozen spaghetti of Production Examples 18 to 22 (each with and without sauce) were produced by the same procedure as in Production Example 5 (noodle extrusion pressure : 15690.64 kPa (160 kgf/cm²)). Using the cooked and frozen spaghetti of Production Examples 18 to 22, the appearance and texture of the spaghetti or spaghetti with sauce after being thawed were evaluated by the same procedure as in Test Example 1. The results are shown in Table 4.

**[Table 4]**

| | Production Example 18 | Production Example 19 | Production Example 20 | Production Example 21 | Production Example 22 |
|---|---|---|---|---|---|
| Melting point of oil or fat (°C) | 0^{*1)} | 3^{*2)} | 10^{*3)} | 15^{*4)} | 20^{*5)} |
| Appearance of spaghetti | 4.9 | 4.7 | 4.4 | 3.1 | 2.8 |
| Texture of spaghetti | 4.8 | 4.3 | 4.0 | 2.4 | 2.2 |
| Appearance of spaghetti with sauce | 4.6 | 4.6 | 4.2 | 3.5 | 3.3 |
| Texture of spaghetti with sauce | 4.6 | 4.4 | 4.0 | 2.7 | 2.3 |

| | | | | | |
|---|---|---|---|---|---|
| ^{*1)} Mixed oil of rapeseed oil and olive oil ^{*2)} Olive oil ^{*3)} Mixed oil of rapeseed oil and palm oil ^{*4)} Mixed oil of rapeseed oil and palm oil ^{*5)} Mixed oil of rapeseed oil and palm oil | | | | | |

### Production Examples 23 to 29

Except for changing the amount of the coating liquid attaching to the boiled spaghetti as shown in Table 5, the cooked and frozen spaghetti of Production Examples 23 to 29 (each with and without sauce) were produced by the same procedure as in Production Example 5 (noodle extrusion pressure: 15690.64 kPa (160 kgf/cm²)). Using the cooked and frozen spaghetti of Production Examples 23 to 29, the appearance and texture of the spaghetti or spaghetti with sauce after being thawed were evaluated by the same procedure as in Test Example 1. The results are shown in Table 5.

**[Table 5]**

| | Production Example 23 | Production Example 24 | Production Example 25 | Production Example 26 | Production Example 27 | Production Example 28 | Production Example 29 |
|---|---|---|---|---|---|---|---|
| Amount of coating liquid attached (parts by mass relative to 100 parts by mass of boiled pasta) | 0 | 0.5 | 1 | 3 | 8 | 12 | 15 |
| Appearance of spaghetti | 3.5 | 3.9 | 4.3 | 4.8 | 4.8 | 4.4 | 4.0 |
| Texture of spaghetti | 3.3 | 3.8 | 4.2 | 4.7 | 4.8 | 4.5 | 3.8 |
| Appearance of spaghetti with sauce | 3.6 | 3.9 | 4.2 | 4.6 | 4.7 | 4.5 | 3.9 |
| Texture of spaghetti with sauce | 3.2 | 3.8 | 4.3 | 4.6 | 4.7 | 4.2 | 3.7 |

### Production Examples 30 to 36

Except for adding durum wheat semolina flour (Leone G: the product of Nisshin Flour Milling Inc.) and hydroxypropylated starch (Yuri: the product of Matsutani Chemical Industry Co., Ltd.) in amounts shown in Table 6, the cooked and frozen spaghetti of Production Examples 30 to 36 (each with and without sauce) were produced by the same procedure as in Production Example 25 (water added: 26 parts by mass, noodle extrusion pressure: 15690.64 kPa (160 kgf/cm²)).

Using the cooked and frozen spaghetti of Production Examples 30 to 36, the appearance and texture of the spaghetti or spaghetti with sauce after being thawed were evaluated by the same procedure as in Test Example 1. The results are shown in Table 6. Also, the results of Production Example 25 are shown again in Table 6.

**[Table 6]**

| | Production Example 30 | Production Example 31 | Production Example 32 | Production Example 33 | Production Example 34 | Production Example 35 | Production Example 36 | Production Example 25 |
|---|---|---|---|---|---|---|---|---|
| Durum semolina flour (parts by mass) | 20 | 30 | 40 | 60 | 80 | 90 | 95 | 100 |
| Hydroxypropylated starch (parts by mass) | 80 | 70 | 60 | 40 | 20 | 10 | 5 | 0 |
| Amount of coating liquid attached (parts by mass relative to 100 parts by mass of boiled pasta) | 1 | 1 | 1 | 1 | 1 | 1 | 1 | 1 |
| Appearance of spaghetti | 3.5 | 4.4 | 4.4 | 4.6 | 4.8 | 4.7 | 4.4 | 4.3 |
| Texture of spaghetti | 3.7 | 4.3 | 4.4 | 4.5 | 5.0 | 4.9 | 4.3 | 4.2 |
| Appearance of spaghetti with sauce | 3.4 | 4.4 | 4.4 | 4.5 | 4.6 | 4.3 | 4.3 | 4.2 |
| Texture of spaghetti with sauce | 3.3 | 4.4 | 4.5 | 4.6 | 4.9 | 4.8 | 4.4 | 4.3 |

### Production Examples 37 to 43

Except for adding durum wheat semolina (Leone G: the product of Nisshin Flour Milling Inc.), hydroxypropylated starch (Yuri: the product of Matsutani Chemical Industry Co., Ltd.), and regular flour (Shirotsubaki: produced by Nisshin Flour Milling Inc.) in amounts shown in Table 7, the cooked and frozen spaghetti of Production Examples 37 to 43 (each with and without sauce) were produced by the same procedure as in Production Example 25 (water added: 26 parts by mass, noodle extrusion pressure :15690.64 kPa (160 kgf/cm²)).

Using the cooked and frozen spaghetti of Production Examples 37 to 43, the appearance and texture of the spaghetti or spaghetti with sauce after being thawed were evaluated by the same procedure as in Test Example 1.
The results are shown in Table 7. Also, the results of Production Example 25 are shown again in Table 7.

**[Table 7]**

| | Production Example 37 | Production Example 38 | Production Example 39 | Production Example 40 | Production Example 41 | Production Example 42 | Production Example 43 | Production Example 25 |
|---|---|---|---|---|---|---|---|---|
| Durum semolina flour (parts by mass) | 20 | 30 | 40 | 60 | 80 | 90 | 95 | 100 |
| Hydroxypropylated starch (parts by mass) | 0 | 0 | 0 | 20 | 10 | 5 | 0 | 0 |
| Regular wheat flour (parts by mass) | 80 | 70 | 60 | 20 | 10 | 5 | 5 | 0 |
| Amount of coating liquid attached (parts by mass relative to 100 parts by mass of boiled pasta) | 1 | 1 | 1 | 1 | 1 | 1 | 1 | 1 |
| Appearance of spaghetti | 3.5 | 4.4 | 4.5 | 4.8 | 4.8 | 4.5 | 4.4 | 4.3 |
| Texture of spaghetti | 3.6 | 4.3 | 4.6 | 4.9 | 5.0 | 4.7 | 4.4 | 4.2 |
| Appearance of spaghetti with sauce | 3.8 | 4.3 | 4.4 | 4.6 | 4.7 | 4.5 | 4.3 | 4.2 |
| Texture of spaghetti with sauce | 3.3 | 4.0 | 4.4 | 4.9 | 4.9 | 4.5 | 4.4 | 4.3 |

### Production Example 44

Durum wheat semolina flour (Leone G: Nisshin Flour Milling Inc.) (100 parts by mass) and water (26 parts by mass) were mixed and then kneaded to prepare noodle dough. Under a reduced pressure condition of -600 mmHg, the resulting dough was extruded into spaghetti once (1.8 mm in diameter) using a pasta making machine. Subsequently, the resulting spaghetti was cut into chips 15 mm in length and kneaded again, then put in the pasta making machine, and extruded under a pressure condition of 11768 kPa (120 kgf/cm²), whereby the fresh spaghetti (1.8 mm in diameter) of Production Example 44 was obtained. The fresh spaghetti thus obtained was boiled in a similar manner to Production Example 25, whereby cooked and frozen spaghetti (with and without sauce) was produced.

Using the cooked and frozen spaghetti of Production Example 44, the appearance and texture of the spaghetti or spaghetti with sauce after being thawed were evaluated by the same procedure as in Test Example 1. The results are shown in Table 8. Also, the results of Production Example 25 are shown again in Table 8. The spaghetti of Production Example 44, which was produced from twice-kneaded dough, was very hard without elasticity, failing in achieving a unique texture of fresh spaghetti.

**[Table 8]**

| | Production Example 25 | Production Example 44 |
|---|---|---|
| Number of extrusion | 1 | 2 |
| Amount of coating liquid attached (parts by mass relative to 100 parts by mass of boiled pasta) | 1 | 1 |
| Appearance of spaghetti | 4.3 | 4.0 |
| Texture of spaghetti | 4.2 | 2.7 |
| Appearance of spaghetti with sauce | 4.2 | 3.8 |
| Texture of spaghetti with sauce | 4.3 | 2.3 |

## Claims

1. A method for producing cooked and frozen pastas, comprising the steps of boiling directly fresh pastas obtained by extruding dough into pasta noodles at a pressure of from 7845.32 to 19613.30 kPa from 80 kgf/cm² to 200 kgf/cm²), bringing the resulting boiled pasta into contact with a liquid comprising an oil or fat having a melting point of 10°C or less, and then freezing the pasta which has been brought into contact with the liquid.

2. The method according to claim 1, wherein the dough is a dough obtained by adding from 18 to 35 parts by mass of kneading water to 100 parts by mass of a flour ingredient, followed by kneading.

3. The method according to claim 1 or 2, wherein the extrusion is performed at from -200 mmHg to under vacuum.

4. The method according to any one of claims 1 to 3, wherein an amount of the liquid comprising an oil or fat having a melting point of 10°C or less attaching to the boiled pasta is from 1 to 12 parts by mass relative to 100 parts by mass of the boiled pasta.

5. The method according to any one of claims 2 to 4, wherein the flour ingredient comprises durum flour and at least one selected from the group consisting of starch, processed starch and regular wheat flour at a blending ratio of from 30 : 70 to 95 : 5.

6. The method according to any one of claims 1 to 5, wherein the freezing step is a step of freezing the pasta with sauce.

## Patentansprüche

1. Verfahren zum Herstellen gekochter und gefrorener Pasta, umfassend die Schritte des direkten Kochens von frischer Pasta, erhalten durch Extrudieren von Teig zu Pastanudeln bei einem Druck von 7845,32 bis 19613,30 kPa (von 80 kgf/cm² bis 200 kgf/cm²), in Kontakt bringen der resultierenden gekochten Pasta mit einer Flüssigkeit, umfassend ein Öl oder Fett mit einem Schmelzpunkt von 10°C oder weniger, und nachfolgend Einfrieren der Pasta, die mit der Flüssigkeit in Kontakt gebracht worden ist.

2. Verfahren nach Anspruch 1, bei dem der Teig ein Teig ist, der durch Zugabe von 18 bis 35 Masseanteilen Knetwasser zu 100 Masseanteilen einer Mehlzutat, gefolgt von Kneten, erhalten wurde.

3. Verfahren nach Anspruch 1 oder 2, bei dem die Extrusion bei von -200 mmHg bis unter Vakuum durchgeführt wird.

4. Verfahren nach einem der Ansprüche 1 bis 3, bei dem die Menge der an der gekochten Pasta anhaftenden Flüssigkeit, die ein Öl oder Fett mit einem Schmelzpunkt von 10°C oder weniger umfasst, von 1 bis 12 Masseanteilen relativ zu 100 Masseanteilen der gekochten Pasta beträgt.

5. Verfahren nach einem der Ansprüche 2 bis 4, bei dem die Mehlzutat Hartweizenmehl und wenigstens eine Zutat, ausgewählt aus der Gruppe, bestehend aus Stärke, verarbeiteter Stärke und normalem Weizenmehl, in einem Mischungsverhältnis von 30:70 bis 95:5 umfasst.

6. Verfahren nach einem der Ansprüche 1 bis 5, bei dem der Schritt des Einfrierens ein Schritt des Einfrierens der Pasta mit Sauce ist.

## Revendications

1. Procédé de production de pâtes cuites et congelées, comprenant les étapes qui consistent à faire bouillir directement des pâtes fraîches obtenues par extrusion d'une pâte pour former des nouilles à une pression de 7845,32 à 19613,30 kPa (80 kgf/cm² à 200 kgf/cm²), à mettre les pâtes cuites ainsi obtenues en contact avec un liquide contenant une huile ou une matière grasse qui présente un point de fusion de 10°C ou moins, et à congeler ensuite les pâtes qui ont été mises en contact avec le liquide.

2. Procédé selon la revendication 1, étant précisé que la pâte est une pâte obtenue en ajoutant de 18 à 35 parties en masse d'eau de pétrissage à 100 parties en masse d'un ingrédient de type farine, puis par pétrissage.

3. Procédé selon la revendication 1 ou 2, étant précisé que l'extrusion est réalisée de -200 mmHg jusqu'à une pression sous vide.

4. Procédé selon l'une quelconque des revendications 1 à 3, étant précisé qu'une quantité du liquide contenant une huile ou une matière grasse qui présente un point de fusion de 10°C ou moins qui reste sur les pâtes cuites va de 1 à 12 parties en masse par rapport à 100 parties en masse des pâtes cuites.

5. Procédé selon l'une quelconque des revendications 2 à 4, étant précisé que l'ingrédient du type farine comprend de la farine de blé dur et l'un au moins des ingrédients choisis dans le groupe constitué par l'amidon, l'amidon traité et la farine de blé courante, avec un rapport de mélange de 30:70 à 95:5.

6. Procédé selon l'une quelconque des revendications 1 à 5, étant précisé que l'étape de congélation est une étape de congélation des pâtes avec de la sauce.
